# DEMANDE DE BREVET EUROPEEN

(11) **EP 1 672 170 A1**
(43) Date de publication de la demande: **21.06.2006**
(21) Numéro de dépôt: 04447278.5
(22) Date de dépôt: 15.12.2004
(51) Int. Cl.: F01D 5/00, G05B 19/401

(54) **Procédé de réparation de disques aubages monoblocs**

(71) Demandeur: Techspace Aero S.A., 4041 Milmort (BE)
(72) Inventeur: Cahay, Philippe, 4317 Faimes (BE); Leulier, Guy, 4900 Spa (BE)
(74) Mandataire: Van Malderen, Michel

(57) **Abrégé**

La présente invention se rapporte à un procédé de réparation et reconstruction d'une aube endommagée appartenant à un disque aubagé monobloc (DAM) constitué d'un rotor solidaire d'une pluralité d'aubes mobiles où on ampute si nécessaire la partie réelle endommagée de l'aube à réparer, caractérisé en ce que la mesure de la partie réelle restante (1) comprend une capture numérique globale de surface par un procédé sans contact de numérisation 3D donnant une mesure dense de points, dite nuage de points.

## Description

### Objet de l'invention

La présente invention se rapporte à un procédé de réparation et reconstruction après dommages ou dégâts d'un rotor à aubages, particulièrement un rotor de type monobloc, destiné à être utilisé comme étage rotorique d'une turbine ou d'un compresseur, par exemple un compresseur basse pression de turboréacteur.

### Arrière-plan technologique et état de la technique

Selon une technique particulière de réalisation des compresseurs, conduisant notamment à un gain de poids et d'encombrement, ainsi qu'à des performances moteur améliorées, il est connu de construire des disques rotoriques munis d'aubes en une seule pièce sous la forme d'un "monobloc" réalisé dans la masse.

On donne communément à ces rotors monoblocs le nom de "DAM" (pour *disque aubagé monobloc)* ou "blisk" (*bladed disk*). Ils sont essentiellement utilisés dans des compresseurs basse ou haute pression pour les moteurs destinés à l'aviation tant militaire que civile.

Une aube est typiquement définie par une série de sections de référence bi-dimensionnelles "empilées" à différentes positions radiales. L'axe d'empilage est l'axe sur lequel sont empilées les sections de référence. Les points d'empilage correspondent à l'intersection entre l'axe d'empilage et chaque section de référence ; il s'agit par exemple des centres géométriques de chaque section de référence. L'angle de vrillage est l'angle formé par la corde d'une section de référence, c'est-à-dire le segment de droite joignant le bord d'attaque au bord de fuite, avec l'axe moteur.

On peut avoir affaire à différents types de dommages occasionnés au rotor et plus particulièrement aux aubes de celui-ci, par exemple dans le cas d'ingestion de corps étrangers tant sur les bords d'attaque que sur les bords de fuite des aubes. Ces dégâts peuvent prendre la forme de coups, de déchirures ou encore de pliures de l'aube.

Le dommage le plus simple et qui affecte le fonctionnement du rotor se rapporte à l'usure de la tête (ou sommet) de l'aube.

D'une part, des dommages relativement ponctuels quant à leur extension, appelés dégâts locaux, peuvent se produire. Ce type de dégâts n'occasionne pas des déformations des sections des aubes ni des déformations globales de l'aube, de sorte que l'axe d'empilage et les angles de vrillage des sections de référence sont toujours maintenus dans les écarts de tolérance prévus.

D'autre part, des dégâts plus importants que les précédents, appelés dégâts globaux, peuvent également se produire. Ils concernent des déformations de l'axe d'empilage, ce qui implique que les aubes ne sont plus alignées et positionnées correctement. En particulier, leur angle de vrillage peut être faussé, suite à la torsion accidentelle de l'aube et/ou leur point d'empilage peut être hors tolérance de position. Toutefois, dans ce cas de figure, il n'y a pas nécessairement de déformation des sections de référence des aubes.

Un degré supérieur de gravité dans les dégâts est atteint lorsque certaines sections de référence sont déformées et ne sont plus conformes aux tolérances de départ.

Dans le cas de la torsion d'une aube par vrillage, par exemple, ou dans le cas de l'usure du sommet d'une aube en service, on est donc confronté à une destruction ou détérioration pouvant pénaliser et parfois même empêcher le bon fonctionnement du moteur.

Dans ces différents cas, si les dégradations en trois dimensions sont importantes, il est généralement d'usage de remplacer purement et simplement le monobloc "blisk" par une nouvelle pièce, ce qui alourdit considérablement le coût de tels dispositifs.

La solution consistant à remplacer le blisk monobloc entier est donc bien entendu économiquement non viable et il importe alors de proposer une solution alternative qui prendrait en compte le besoin de pouvoir réparer une pièce endommagée selon l'une des manières décrites ci-dessus.

Le brevet US-A-6,542,843 décrit les principes généraux d'une méthode de création de surfaces de raccord entre une ou plusieurs parties existantes d'une aube et une partie brute qui doit être usinée. Cette méthode peut être appliquée à la production ou la réparation de blisks. La priorité est donnée à la continuité du profil plutôt qu'au respect des tolérances de position prédéfinies.

Aussi ce brevet élude une question essentielle, à savoir la précision de raccordement des surfaces qu'il est technologiquement possible de réaliser. S'il est possible de calculer des surfaces de raccordement parfaitement continues en tout point, les obtenir physiquement n'est pas réalisable, car on se heurte aux limites de précision des différentes étapes du procédé, à savoir la mesure, les approximations dans le calcul des surfaces et la précision d'usinage. La solution actuelle à cette difficulté est de laisser une épaisseur de matière excédentaire sur l'entièreté des surfaces à réusiner et d'effectuer par la suite une finition manuelle. De manière plus concrète, l'épaisseur excédentaire de matière est calculée de manière à être égale ou supérieure à l'intervalle de tolérance (IT) du procédé, celui-ci valant la somme des imprécisions des différentes étapes du procédé.

De plus, pour la création des surfaces adaptées, ce brevet laisse sous-entendre une approche analytique, c'est-à-dire basée sur les sections de définition des aubes. Cette approche analytique présente l'inconvénient d'une lourdeur de mise en oeuvre.

La solution à ce deuxième problème serait de travailler sur une définition globale surfacique de l'aube, plutôt qu'une approche analytique par sections. Celle-ci permettrait de traiter directement les surfaces et éviterait de fastidieuses opérations :
- d'extraction de sections hors des surfaces mesurées,
- de l'adaptation de ces sections et
- de génération des nouvelles surfaces adaptées.

Le document EP-A-1 129 813 décrit une méthode d'usinage pour la réparation d'aubes de blisk. Cette méthode comporte trois étapes :
1) la mesure de la position réelle des aubes, par palpage mécanique c'est-à-dire une mesure par contact en un nombre limité de points dans les zones proches de la zone à réparer, ainsi que le calcul des écarts ou "offset" en translation et rotation par rapport à la géométrie nominale de l'aube ;
2) le positionnement de l'aube de manière à compenser ces écarts et replacer au mieux l'aube en position nominale ;
3) l'usinage de l'aube suivant un programme nominal stocké dans la commande numérique du centre d'usinage.

Cette méthode ne tient pas compte des déformations de profil qui peuvent être différentes pour chacune des sections. Le réusinage des surfaces suivant une géométrie nominale adaptée à la position réelle des aubes ne peut assurer des raccords conformes en tout point entre les surfaces existantes et les surfaces reconstruites et réusinées. Par ailleurs, la remarque relative à la précision de raccordement des surfaces émise pour le brevet US-A-6,542,843 est également pertinente ici.

La solution à ces deux difficultés est à nouveau de laisser une épaisseur de matière excédentaire égale ou supérieure à l'intervalle de tolérance du procédé (IT) sur l'entièreté des surfaces à réusiner et d'effectuer par la suite une finition manuelle.

En ce qui concerne les méthodes existantes de réparation de blisk par usinage adaptatif, on observe une gradation dans l'approche adaptative utilisée.

Une approche adaptative élémentaire est proposée dans EP-A-1 129 813. Cette méthode consiste à palper un nombre limité de points sur la surface existante, à en calculer les écarts moyens (en translation et rotation) par rapport à la géométrie nominale et à en adapter le programme d'usinage de manière à compenser ces écarts.

Une approche adaptative déjà plus élaborée est celle proposée dans US-A-6,542,843. Cette méthode de création de surfaces adaptées, qui donne la préséance à la continuité de profil plutôt qu'au exigences de position, est basée sur la mesure de quelques points des surfaces existantes. Ces points sont toujours mesurés dans les zones adjacentes à la frontière avec les zones "adaptées". Cette méthode s'appuie intrinsèquement sur la définition analytique des surfaces des aubes, c'est-à-dire sur leur squelette de définition composé par des sections et un axe d'empilage.

Le brevet US-B-6,568,077 propose un procédé physique de réparation de blisk où la partie endommagée d'une aube de blisk est enlevée par usinage. Cette partie manquante est reconstruite par soudage. La partie soudée est ensuite usinée afin de rendre à l'aube une configuration aussi proche que possible de la configuration nominale, telle qu'existante avant son endommagement.

### Buts de l'invention

La présente invention vise à proposer une solution qui s'affranchisse des inconvénients de l'état de la technique.

La présente invention vise à fournir un procédé de réparation des disques "blisk" présentant une simplification du calcul et une amélioration de la qualité des surfaces adaptées usinées.

L'invention a encore pour but de proposer un procédé qui permette de simplifier et réduire de manière significative l'opération de finition manuelle inévitable après l'usinage des surfaces adaptées.

Un but complémentaire de la présente invention est de réparer des disques aubagés monoblocs qui présentent des déformations globales au niveau d'une ou plusieurs aubes.

### Principaux éléments caractéristiques de l'invention

Un premier objet de la présente invention propose un procédé de réparation et reconstruction d'aubes dans les disques aubagés monoblocs, qui soit plus performant que les procédés de l'état de la technique. Plus particulièrement, selon les termes de la revendication 1, l'innovation résulte du fait que, pour l'étape de mesure des coordonnées surfaciques de l'aube reconstituée brute avant usinage, on réalise ingénieusement une capture numérique globale de la surface de l'aube reconstituée brute par un procédé de digitalisation 3D donnant une mesure dense de points (nuage de points).

Un avantage particulier de l'invention est de proposer un procédé qui traite une surface d'aube dans sa globalité, contrairement aux procédés connus dans l'état de la technique qui assimilent l'aube à un squelette constitué de sections agencées sur un axe d'empilage.

Des modalités d'exécution préférées de l'invention sont explicitées dans les revendications subsidiaires 2 à 12.

Un second objet de l'invention concerne un disque aubagé monobloc présentant au moins une aube réparée par mise en oeuvre du procédé décrit ci-dessus.

### Brève description des figures

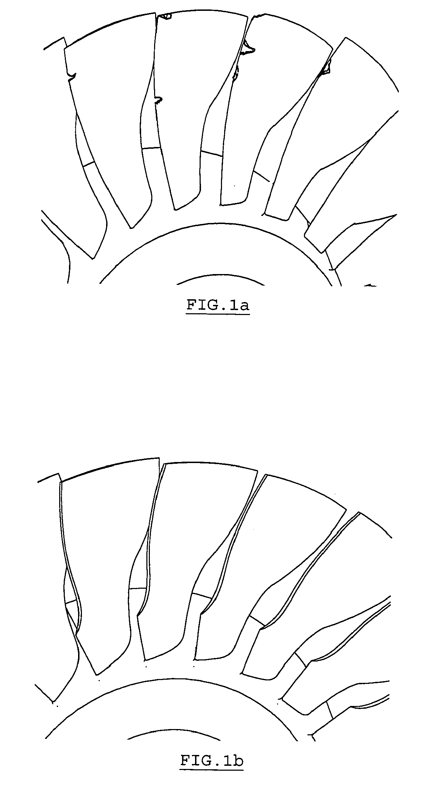

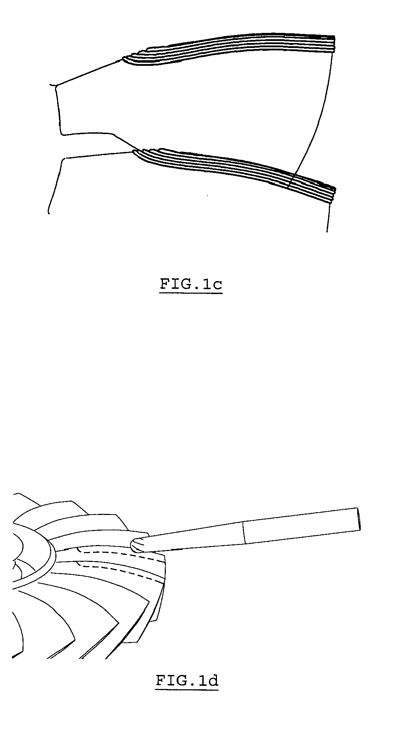

Les figures 1a, 1b, 1c et 1d représentent un rotor "blisk" endommagé et que l'on traite selon le procédé de reconstruction de la présente invention.

Plus précisément, la figure la montre une aube endommagée. La figure 1b montre ladite aube après amputation de la zone qui a subi le dégât. La figure 1c montre la reconstruction de ladite aube par soudage et la figure 1d montre le blisk reconstitué après fraisage adaptatif multi-axes, de préférence 4 axes et plus.

La figure 2 représente graphiquement un exemple de fichier de nuage de points obtenu par numérisation 3D selon l'invention.

La figure 3 représente schématiquement l'application du principe de réparation selon l'invention, dans le cas de la réparation d'un bord d'attaque ou un bord de fuite.

Les figures 4a, 4b, 4c et 4d représentent graphiquement les calculs de reconstruction de la surface adaptée respectivement avant usinage (4a, 4b) et après usinage (4c, 4d) avec une surépaisseur pour finition manuelle dans la zone de transition.

La figure 5 représente schématiquement l'application du principe de réparation selon l'invention, dans le cas de la réparation d'un coin d'aube par soudure d'un patch.

La figure 6 représente schématiquement l'application du principe de réparation selon l'invention, dans le cas de la réparation d'un sommet d'aube.

Dans la suite de l'exposé, on parlera de partie ou zone existante ou restante de l'aube pour désigner la partie de l'aube conservée après amputation de la partie abîmée et de partie ou zone adaptée pour désigner la partie nouvelle calculée, usinée et raccordée selon la présente invention.

### Description d'une forme d'exécution préférée de l'invention

La présente invention permet de faire face aux différents types de dégâts repris ci-dessus, en proposant une méthode de reconstruction des zones endommagées de l'aube en tenant compte des tolérances de forme et/ou de position de l'aube par rapport aux tolérances fixées au départ.

Les figures 1a, 1b, 1c, 1d sont des représentations à différentes étapes de la mise en oeuvre du procédé de l'invention. Elles montrent à partir d'une aube endommagée (fig. la), une amputation des parties abîmées (fig. 1b), la reconstruction de celles-ci par soudage de matière nouvelle (fig. 1c) et enfin la finition par fraisage adaptatif réalisé sur un centre d'usinage, par exemple équipé de cinq axes de mouvement (fig. 1d).

La présente invention propose l'adoption d'un procédé de numérisation 3D pour la réparation d'aubes de blisks, et plus particulièrement un procédé de mesure sans contact du type scanning ou photogrammétrie. D'après *Terminologie de Télédétection et Photogrammétrie* (PUF, 1997), la "photogrammétrie est la science et l'art dont le sujet d'étude est la photographie dans l'intention de recueillir des données conduisant à des restitutions dimensionnelles et de déterminer la forme et la position d'un objet dans l'espace".

Cette famille de procédés de mesure sans contact permet de capturer la forme d'un objet, ici une aube de blisk, par une mesure dense de points. On ne mesure pas une ou quelques cotes particulières, mais un grand nombre de points de la surface de l'objet.

Les moyens de contrôle communément utilisés, par exemple le palpage mécanique, pour la mesure d'aubes de blisk lors du procédé de réparation font généralement appel à une approche analytique, c'est-à-dire se rapportant aux sections de définition de l'aube. Cette approche analytique est pénalisante en termes de complexité et par conséquent également en termes de difficulté de programmation. Cette méthode est en outre peu adaptée pour être effectuée sur un centre d'usinage.

La solution résultant de l'invention est d'employer un moyen de mesure par numérisation 3D, qui autorise la capture d'un très grand nombre de points appartenant aux surfaces à mesurer. Le résultat de la mesure est fourni sous la forme d'un fichier informatique correspondant à un nuage de point, chaque point étant défini par un triplet de coordonnées P(X,Y,Z). Ce nuage de point est ensuite transformé en équations mathématiques, par exemple des NURBS (*Nonuniform Rational B-Splines*) ou des courbes de Bézier, ce qui les rend aisément maniables par des logiciels standards de traitement de surfaces et rend aisément possible de définir des critères complexes d'adaptation des surfaces.

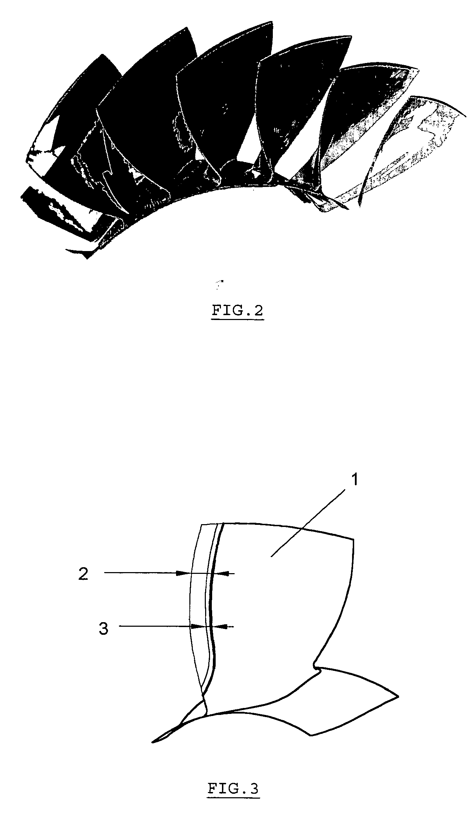

Un exemple d'un fichier graphique de nuage de point est donné sur la figure 2.

En résumé, la méthode proposée par la Demanderesse ne s'appuie plus sur une définition analytique comme les deux méthodes précitées, mais bien sur une méthode surfacique globale, où les surfaces sont numérisées, transformées en équations mathématiques, ce qui les rend aisément manipulables par des moyens informatiques.

Des surfaces "adaptées" de très haute qualité peuvent être générées mathématiquement en utilisant des fonctions standards d'un logiciel de traitement de surface disponible sur le marché, comme par exemple Catia® ou Unigraphix® .

Cette haute qualité de surface est déterminante pour obtenir des surfaces adaptées qui se raccordent parfaitement et en tout point avec les surfaces préexistantes de l'aube.

Cette approche globale et surfacique offre ici un avantage non négligeable sur toutes les autres approches analytiques pour cette réparation.

Un objet complémentaire de la présente invention est de proposer une méthode de réalisation du raccordement des surfaces existantes et adaptées lors de la réparation d'aubes de blisk.

Cette méthode est basée sur la création d'une zone de transition entre ces surfaces existantes et adaptées, une épaisseur excédentaire de matière étant laissée dans la zone de transition en vue d'une reprise manuelle ultérieure par usinage.

Le problème à résoudre est le suivant : la précision de l'usinage des surfaces adaptées et en particulier la précision de raccordement des surfaces, qu'il est possible d'atteindre dans l'état actuel de la technique, n'est pas suffisante, en ce sens qu'elle est hors tolérance, ce qui impose une finition manuelle.

Ces défauts de raccordement des surfaces représentent des discontinuités pour les flux aérodynamiques et génèrent des pertes de performance non acceptables. De plus, ces défauts de raccordement représentent, d'un point de vue de la résistance mécanique, des points d'accumulation de contraintes également non acceptables.

Ce manque de précision peut être à l'origine de deux défauts :
1) l'usinage laisse une épaisseur de matière excédentaire. Il reste un petit ressaut de matière à l'interface. Ce résidu de matière excédentaire doit alors être enlevé sur toute la zone usinée ;
2) l'usinage enlève trop de matière et amincit donc l'aube de manière trop importante. Il y a dans ce cas un ressaut négatif de matière à l'interface. Ce cas de figure est à éviter absolument, pour des raisons de résistance de l'aube réparée.

Afin d'éviter ce deuxième cas de figure, selon l'invention, on se place généralement délibérément dans le premier cas de figure, laissant sur tout le profil adapté une surépaisseur qui devra être enlevée par la suite.

Il est à noter qu'il est fréquent, sur une même aube, de se trouver à certains endroits dans le cas de figure n° 1 (excédent de matière) et à d'autres endroits dans le cas de figure n° 2 (déficit de matière). Ceci est dû au fait que les déformations de profil d'une aube peuvent être différentes d'une section à l'autre.

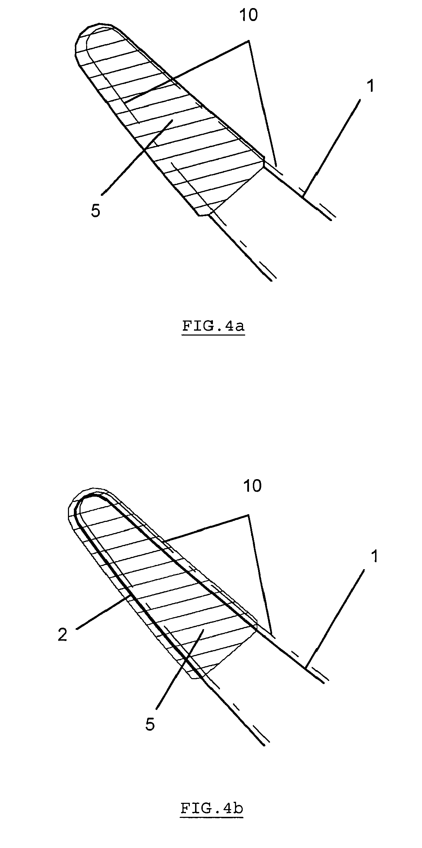

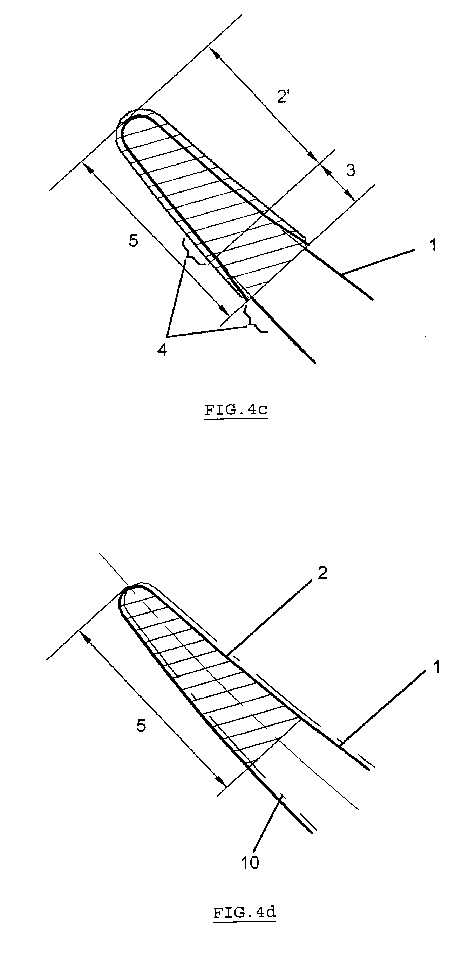

Selon une forme préférée de l'invention, après les opérations d'amputation et de reconstruction 5 par soudage des parties endommagées, la surface "adaptée" est "construite" numériquement en deux étapes :
1) comme représenté sur les figures 4a et 4b, un extrait 2 selon le profil analytique nominal 10 de l'aube est ajusté au mieux en position avec la partie existante 1 afin de combler la partie manquante et reconstituer une aube complète, ou en variante, la surface adaptée 2 est générée à l'aide d'une fonction standard du logiciel de traitement de surface, en se basant sur les équations mathématiques de la définition nominale de la partie manquante de l'aube, auxquelles on fait subir des transformations mathématiques afin de les raccorder aux équations mathématiques issues de la numérisation 3D de la partie existante de l'aube pour former une aube complète (voir procédé de numérisation 3D) ;
2) comme représenté sur la figure 4c, une zone de transition 3 est prévue sur la partie adaptée 2, le long de la frontière qui la relie à la partie existante 1 de l'aube. Une surépaisseur est laissée dans cette zone de transition uniquement (voir figure 3).

Après le calcul de la surface adaptée 2 et des surfaces de la zone de transition 3, la zone 2' et la zone 3 sont usinées par fraisage (voir figure 4c). La zone 3 est ensuite finie manuellement, afin d'obtenir le résultat présenté sur la figure 4d.

Comme représenté sur la figure 4c, la surépaisseur se caractérise comme suit. Dans la zone de transition 3, elle est maximale à la frontière de la partie existante 1 de l'aube et tend vers zéro avec un raccordement tangent du coté de la surface reconstituée et adaptée 2. De part et d'autre de la zone de transition 3, on trouve alors à cotes finies une zone d'appui 4 pour la finition manuelle terminale de la zone de transition.

De préférence, la surépaisseur dans cette zone de transition 3 le long de l'interface est calculée en fonction de l'intervalle de tolérance attribué au procédé de réparation, de manière à ne jamais reprendre de matière sur la partie existante.

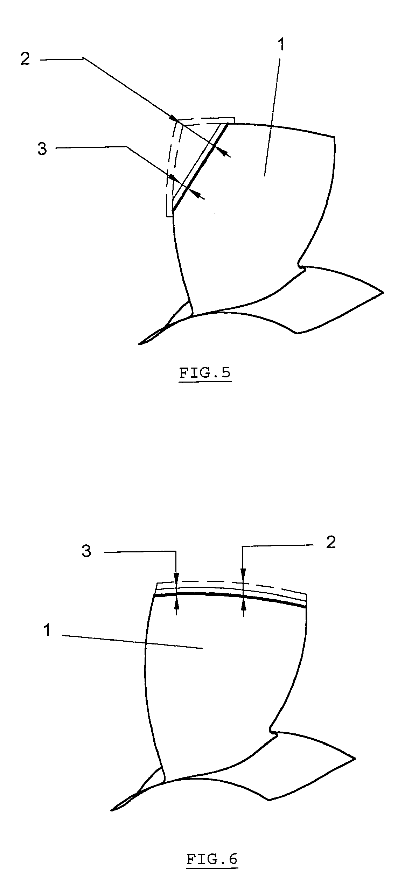

Ce principe est applicable aux différents cas suivants :
- réparation de bord d'attaque ou bord de fuite (voir figure 3) ;
- réparation de coin d'aube par soudure d'un patch (voir figure 5) ;
- réparation de sommet d'aube (voir figure 6).

### Avantages de l'invention

L'application du procédé de numérisation 3D selon l'invention à la réparation de blisks offre les avantages suivants.

La technique du nuage de points permet de connaître en tout point la position réelle de l'aube et ainsi de reconstituer des surfaces adaptées qui sont continues en tout point par rapport aux surfaces réelles existantes. Les surfaces ainsi obtenues sont de qualité nettement supérieure à celles obtenues dans le cas où on utilise des palpeurs par contact et une approche analytique de reconstruction de surfaces adaptées. En effet, dans ce cas, la continuité des surfaces ne peut être garantie pour les points situés entre les sections de définition de l'aube, car ces points ne sont pas pris en compte par cette approche analytique.

Les bords d'attaque et bords de fuite, qui sont particulièrement difficiles à mesurer en utilisant une méthode de mesure par contact (rayons très petits), peuvent ici être mesurés avec une grande précision et une grande facilité.

Les temps de mesure et de traitement informatique des données digitalisées peuvent être aisément réduits par une automatisation du procédé.

Ces mesures peuvent s'effectuer hors ligne, c'est-à-dire en dehors du centre d'usinage. Ce dernier, qui est généralement par nature très peu performant en mesure, n'est dès lors pas immobilisé pendant le temps nécessaire aux mesures et au traitement des données.

La programmation de la mesure étant généralement extrêmement lourde sur un centre d'usinage, le fait de réaliser la programmation des mesures sur du matériel dédié à cet effet représente un nouvel avantage en terme de gain de temps et de possibilités techniques plus larges pour les mesures.

Les avantages de la réparation en utilisant une surface adaptée avec zone de transition sont les suivants.

Grâce à cette méthode, la majeure partie des surfaces adaptées sont usinées à cotes finies. Aucune finition manuelle n'est nécessaire dans ces zones, ce qui représente un gage de précision et de fiabilité. La finition manuelle se limite à la zone de transition mentionnée ci-dessus.

Lors de la finition manuelle, l'ajusteur peut s'appuyer de part et d'autre de la zone de transition sur des surfaces qui sont définitives, ce qui facilite grandement et rend plus précise l'opération.

Le gain de précision est déterminant pour la réussite de l'opération de réparation. En effet, cette opération manuelle représente un risque important d'imprécision car elle est liée à la dextérité de l'opérateur.

Enfin, les zones délicates et à tolérances réduites que sont les bords d'attaque et de fuite sont finies par usinage, c'est-à-dire avec un niveau de précision maîtrisé.

## Revendications

1. Procédé de réparation et reconstruction d'une aube endommagée appartenant à un disque aubagé monobloc (DAM) constitué d'un rotor solidaire d'une pluralité d'aubes mobiles, comprenant les étapes suivantes :
- on ampute si nécessaire la partie réelle endommagée de l'aube à réparer ;
- on complète physiquement la partie réelle restante ou existante (1) par ajout de matière (5), par soudage, pour obtenir une aube reconstituée brute et on soumet éventuellement l'aube reconstituée brute à un traitement thermique pour relâcher les tensions ;
- on reconstitue numériquement une géométrie d'aube complète par raccordement à la partie réelle restante (1) telle qu'elle se présente après l'opération de soudage et déterminée à partir d'une mesure, d'un élément manquant, dit partie adaptée (2), basé sur au moins une partie de la géométrie d'aube nominale (10), de manière à être aussi proche que possible de la géométrie d'aube nominale ;
- on réalise, sur un centre d'usinage, un usinage adaptatif de l'aube reconstituée brute, piloté par un logiciel pour arriver à une géométrie finale (1,2) correspondant à la géométrie reconstituée numériquement,
**caractérisé en ce que** la mesure de la partie réelle restante (1) comprend une capture numérique globale de surface par un procédé sans contact de numérisation 3D donnant une mesure dense de points, dite nuage de points.

2. Procédé de réparation selon la revendication 1, **caractérisé en ce que** le procédé de numérisation 3D est un procédé de scanning laser ou de photogrammétrie, avec une densité de points d'au moins 20 points / mm et une précision de position des points d'au moins 0,03 mm.

3. Procédé de réparation selon la revendication 1 ou 2, **caractérisé en ce que** ledit nuage de points est ensuite transformé en un modèle numérique par reverse-engineering, via mise en équations mathématiques, par exemple des NURBS ou des courbes de Bézier, pour les rendre exploitables par des fonctions standard d'un logiciel CAO de description de surface, notamment avec utilisation de critères pour le raccordement de la surface adaptée (2) à la surface existante (1) de l'aube.

4. Procédé de réparation selon l'une quelconque des revendications précédentes, **caractérisé en ce que**, lors de l'étape d'usinage adaptatif, une surépaisseur de matière est laissée dans une zone de transition (3) à l'interface entre la surface existante (1) et la surface adaptée (2), ladite épaisseur étant prévue en vue d'une finition manuelle ultérieure.

5. Procédé de réparation selon la revendication 4, **caractérisé en ce que** le calcul de la surface adaptée (2) est réalisé en deux étapes :
- un extrait (2) selon le profil analytique nominal (10) de l'aube est ajusté au mieux en position avec la partie existante (1) afin de combler la partie manquante et reconstituer une aube complète ;
- la zone de transition (3) précitée est créée sur la partie adaptée (2), le long de la frontière qui la relie à la partie existante (1) de l'aube, la surépaisseur précitée étant laissée dans cette zone de transition.

6. Procédé de réparation selon la revendication 5, **caractérisé en ce qu'**en variante de la première étape, la surface adaptée (2) est générée à l'aide d'une fonction standard du logiciel CAO de description de surface, en se basant sur les équations mathématiques de la définition nominale de la partie manquante de l'aube, auxquelles on fait subir des transformations mathématiques afin de les raccorder aux équations mathématiques issues de la numérisation 3D de la partie existante (1) de l'aube pour former une aube complète.

7. Procédé de réparation selon la revendication 5 ou 6, **caractérisé en ce que**, dans la zone de transition (3), la surépaisseur est maximale à la frontière de la partie existante (1) de l'aube et tend vers zéro avec un raccordement tangent du coté de la surface déjà reconstituée et adaptée (2'), avec de fait, de part et d'autre de la zone de transition (3), une zone d'appui (4) à cotes finies pour faciliter la finition manuelle ultérieure de la zone de transition.

8. Procédé de réparation selon la revendication 7, **caractérisé en ce que** la surépaisseur dans cette zone de transition (3) le long de ladite interface est calculée en fonction de l'intervalle de tolérance attribué au procédé de réparation, de manière à ne jamais reprendre de matière sur la partie existante (1).

9. Procédé de réparation selon l'une quelconque des revendications précédentes, **caractérisé en ce que** le soudage pour compléter les parties restantes de l'aube par ajout de matière correspond à un soudage laser, de préférence un rechargement laser (laser cladding) avec apport de matière sous forme de fil ou poudre ou encore le soudage d'un patch.

10. Procédé de réparation selon l'une quelconque des revendications précédentes, **caractérisé en ce que** l'usinage adaptatif est un fraisage multi-axes, de préférence 4 axes et plus.

11. Procédé de réparation selon l'une quelconque des revendications précédentes, **caractérisé en ce que** lesdites mesures et le traitement numérique de celles-ci sont réalisés sur un matériel dédié, en dehors du centre d'usinage.

12. Procédé de réparation selon l'une quelconque des revendications précédentes, **caractérisé en ce qu'**il est appliqué à la réparation d'un bord d'attaque ou de fuite, d'un sommet ou d'un coin d'aube.

13. Disque aubagé monobloc présentant au moins une aube réparée par mise en oeuvre du procédé selon l'une quelconque des revendications précédentes.
